# EUROPÄISCHE PATENTSCHRIFT

(11) **EP 1 125 491 B1**
(45) Veröffentlichungstag und Bekanntmachung des Hinweises auf die Patenterteilung: **15.06.2005**
(21) Anmeldenummer: 01103218.2
(22) Anmeldetag: 12.02.2001
(51) Int. Cl.: A01D 78/10

(54) **Landwirtschaftliche Arbeitsmaschine**
Agricultural working machine
Machine de travail agricole

(30) Priorität: 15.02.2000 DE 10006737
(43) Veröffentlichungstag der Anmeldung: 22.08.2001
(73) Patentinhaber: CLAAS Saulgau GmbH, 88348 Bad Saulgau (DE)
(72) Erfinder: Schelkle, Roland, 88348 Bad Saulgau (DE); Fuchs, Peter, 72516 Scheer (DE); Reber, Erwin, 88348 Bad Saulgau (DE)

(56) Entgegenhaltungen:
- EP-A- 0 508 200
- EP-A- 0 857 413
- EP-A- 0 914 766
- DE-A- 4 003 203
- DE-A- 4 027 025
- DE-U- 8 811 010
- DE-U- 8 901 611
- DE-U- 9 320 479
- GB-A- 2 323 010

## Beschreibung

Die Erfindung betrifft eine landwirtschaftliche Arbeitsmaschine mit zumindest einem, um eine quer zur Fahrtrichtung verlaufende Achse schwenkbaren Arbeitswerkzeug gemäß dem Oberbegriff des Anspruchs 1.

Aus der europäischen Patentschrift EP 0 857 413 A1 ist eine derartige, als Heuwerbungsmaschine ausgeführte landwirtschaftliche Arbeitsmaschine bekannt geworden, deren als Rechkreisel ausgeführten Arbeitswerkzeuge um annähernd vertikale Achsen umlaufen, wobei über die an Tragarmen angeordneten Rechzinken auf dem Boden liegendes Erntegut aufgenommen, weitergeleitet und je nach Ausführung der Zinkenarmsteuerung an anderer Stelle wieder abgelegt werden kann. Untenseitig ist dem Rechkreisel ein zweirädriges Fahrwerk zugeordnet, welches den Rechkreisel auf dem Boden abstützt. Da die freien Enden der auf den Tragarmen angeordneten Rechzinken in unmittelbarer Nähe des Bodens über diesen hinwegstreichen, können Bodenunebenheiten aufgrund von Hindernissen oder Vertiefungen zu einer die Arbeitsqualität der Heuwerbungsmaschine stark beeinträchtigenden Beschädigung der Rechzinken oder zu einer die Qualität des Erntegutes stark herabsetzenden Verschmutzung führen. Beim Überfahren von Hindernissen kommt es außerdem zu einer die Gutmitnahme verschlechternden Vergrößerung des Abstandes der Rechzinken zum Boden. Um die negativen Auswirkungen von Bodenunebenheiten einzugrenzen, sind einerseits die Laufräder der Fahrwerke in dem Bereich unterhalb des jeweiligen Rechkreisels angeordnet, in dem die Rechzinken mit geringem Abstand zum Boden diesen überstreichen. Auf diese Weise übernehmen die Laufräder innerhalb bestimmter Grenzen eine bodenkopierende Funktion. Damit die mit einer derartigen Laufradanordnung zum Teil sehr mangelhafte Bodenanpassung verbessert wird, sind die als Rechkreisel ausgeführten Arbeitswerkzeuge um in Fahrtrichtung und quer hierzu verlaufende Achsen pendelbar über Auslegerarme an einem Hauptrahmen angeordnet. Damit die Rechkreisel beim Bewegen ähnlicher Heuwerbungsmaschine nicht um ihre quer zur Fahrtrichtung angeordnete Schwenkachse ausgelenkt werden, ist jedem Rechkreisel in Fahrtrichtung ein weiteres, diese Drehbewegung verhinderndes Stützrad vorgeordnet. Besonders nachteilig wirkt sich bei einer derartigen Ausführung der Umstand aus, daß einerseits das Stützrad über das noch in Breitablage oder bereits in einem Einzelmähschwad befindliche Erntegut läuft und zum anderen das Stützrad durch die Rechzinken des ihm nachgeordneten Rechkreisels mit dem aufgenommenen und durch die Rechzinken beförderten Erntegut in Kontakt kommt. Dies führt in erheblichem Umfang zu verschleißfördernden Wickelvorgängen im Bereich der Stützräder.

Damit eine weitere Verbesserung der bodenkopierenden Funktion der Laufräder erreicht wird, kann das den jeweiligen Rechkreisel am Boden abstützende Fahrwerk über wenigstens ein vorderes und ein hinteres Laufrad aufweisende Doppelschwingen, sogenannte "Tandem-Achsen" gemäß der in der DE 38 08 931 offenbarten Ausführung verfügen. Aufgrund der zusätzlichen, quer zur Fahrtrichtung verlaufenden Schwenkachse der Arbeitsorgane wäre bei einer derartigen Ausführung weiterhin ein mit den bereits erwähnten Nachteilen behaftetes Stützrad erforderlich, welches ein Kippen der Arbeitsorgane verhindert.

Der Erfindung liegt deshalb die Aufgabe zugrunde, eine landwirtschaftliche Arbeitsmaschine mit zumindest einem, um eine quer zur Fahrtrichtung verlaufende Achse schwenkbaren Arbeitswerkzeug so auszubilden, daß die Arbeitswerkzeuge eine gegenüber dem Stand der Technik verbesserte Bodenkopierung realisieren ohne daß hierfür die Arbeitsqualität der Maschine einschränkende Stützelemente vorgesehen werden müssen.

Erfindungsgemäß wird die Aufgabe durch eine landwirtschaftliche Arbeitsmaschine mit den kennzeichnenden Merkmalen des Anspruchs 1 gelöst.

Indem das dem jeweiligen Arbeitsorgan zugeordnete Fahrwerk von wenigstens einem Paar um eine horizontale und quer zur Fahrtrichtung verlaufende Achse pendelbaren, über wenigstens ein vorderes und ein hinteres Laufrad verfügende Doppelschwingen gebildet wird, wobei die Doppelschwingen miteinander und mit dem Arbeitswerkzeug über Koppelglieder gelenkig verbunden sind, wird einerseits sichergestellt, daß ein quer zur Fahrtrichtung pendelbares Arbeitswerkzeuge einer landwirtschaftlichen Arbeitsmaschine mit einer die Bodenkopierung deutlich verbessernden sogenannten Tandemachse ausgerüstet werden kann, ohne daß den Arbeitsorganen die Arbeitsweise der Maschine beeinträchtigende Stützelemente zugeordnet werden müssen. In vorteilhafter Weise sind die das Arbeitswerkzeug gegen die Doppelschwingen abstützenden Koppelglieder im Bereich des Fahrwerks und damit außerhalb des auf dem Boden liegenden oder von den Arbeitsorganen transportierten Erntegutes angeordnet.

Auf konstruktiv einfache Weise können die die Doppelschwingen mit dem Arbeitswerkzeug verbindenden Koppelglieder als Zug-Druck-Streben und Pendelbalken ausgeführt sein.

In einer weiteren, wenig mechanische Bauteile aufweisenden Ausführung können die Koppeiglieder auch von Hubzylindern gebildet werden, die über ein Leitungssystem in Parallelschaltung miteinander verbunden sind.

In besonders einfacher, bauraumsparender und kraftgerechter Weise wird die Abstützung des jeweiligen Arbeitsorgans gegen das ihm zugeordnete Fahrwerk dadurch erreicht, daß jeder Doppelschwinge wenigstens eine Zug-Druck-Strebe gelenkig zugeordnet ist, die anderenends an einem gemeinsamen, mit dem Arbeitswerkzeug in Wirkverbindung stehenden Pendelbalken schwenkbeweglich befestigt sind.

Zur Gewährleistung einer leichtgängigen, reibungs- und damit verschleißarmen Arbeitsweise des von den Koppelgliedern gebildeten Koppelmechanismus sowie zur Vermeidung von Zwangskräften bei der Bewegung der Koppelglieder sind die Zug-Druck-Streben über Kugelgelenke mit den Doppelschwingen und dem Pendelbalken verbunden, wobei der Pendelbalken konstruktionsvereinfachend nur um eine vertikale Achse pendelbar am Arbeitswerkzeug angeordnet ist.

Damit die von den Zug-Druck-Streben aufzunehmenden und auf das Fahrwerk zu übertragenden Stützkräfte des Arbeitswerkzeuges durch die Zug-Druck-Streben in kraftgerechter Weise aufgenommen werden können, ohne daß hierfür extreme Querschnitte der Zug-Druck-Streben erforderlich wären, sind die Zug-Druck-Streben zur Vertikalen geneigt zwischen den Doppelschwingen des Fahrwerks und dem Arbeitsorgan angeordnet.

In einer weiteren vorteilhaften Ausgestaltung kann das Fahrwerk um eine horizontale und quer zur Fahrtrichtung verlaufende Achse am Arbeitswerkzeug oder einem mit dem Arbeitswerkzeug drehfest verbundenen Tragrahmen schwenkbar angeordnet sein, wobei zwischen Fahrwerk und Arbeitswerkzeug eine Höhenverstellung zwischengeschaltet ist, so daß der Abstand der Arbeitsorgane zum Boden einstellbar wird.

Damit beim Fahren auf der Straße eine höhere Kippstabilität der landwirtschaftlichen Arbeitsmaschine erreicht wird, ist in einer weiteren vorteilhaften Ausgestaltung der Erfindung vorgesehen, daß die Doppelschwingen jedes Fahrwerkes so verschwenkt werden können, daß ein Teil der in Arbeitsstellung auf dem Boden laufenden Laufräder ausgehoben wird. Im einfachsten Fall wird dies dadurch erreicht, daß die Zug-Druck-Streben mit ihren Schwenkachsen sowie der Tragrahmen des Fahrwerks mit seinen Schwenkachsen ein Gelenkviereck bilden, wobei die Zug-Druck-Streben kürzer als der verschwenkbare Tragrahmen sind, so daß der mit den Zug-Druck-Streben verbundene Teil der Doppelschwingen in vertikaler Richtung ausgelenkt wird und die in diesem Bereich der Doppelschwingen angeordneten Laufräder vom Boden abheben. Die Fahrstabilität in Transportstellung verbessernd, verbleiben dabei die mit größerem Abstand zueinander und quer zur Fahrtrichtung angeordneten Laufräder auf dem Boden.

Um eine raumsparende Ausführung des von den Koppelgliedern gebildeten Koppelmechanismus zu erreichen, sind in einer weiteren vorteilhaften Ausgestaltung der Erfindung die Zug-Druck-Streben in dem sich quer zur Fahrtrichtung erstreckenden Zwischenraum zwischen den Laufrädern der benachbarten Doppelschwingen angeordnet. Diese raumsparende Bauweise wird dadurch noch erhöht, daß die Zug-Druck-Streben einenends jeweils direkt an den Drehachsen der den Doppelschwingen zugeordneten Laufräder angelenkt sind.

Um eine stabile Lagerung der die Zug-Druck-Streben aufnehmenden Laufradachsen sicherzustellen, sind den jeweiligen Laufradachsen vorteilhafter Weise Haltestreben zugeordnet, die die jeweiligen Laufräder zusätzlich am Fahrwerk der landwirtschaftlichen Erntemaschine abstützen. In besonders einfacher Weise kann dies dadurch erreicht werden, daß die Haltestreben mit der Drehachse der Doppelschwingen drehbeweglich verbunden sind.

Um die Standsicherheit der landwirtschaftlichen Arbeitsmaschine zu erhöhen, können die nicht im Arbeitsbereich der Arbeitswerkzeuge angeordneten hinteren Laufräder jeder Doppelschwinge mit im Vergleich zu den vorderen Laufrädern größerem Abstand zueinander angeordnet sein, so daß eine größere Spurweite erreicht wird.

Um die Nachlaufeigenschaften der landwirtschaftlichen Arbeitsmaschine bei Kurvenfahrt zu verbessern kann wenigstens ein Laufrad jeder Doppelschwinge als Nachlaufrad ausgebildet sein.

Vorteilhafte Ausgestaltungen sind Gegenstand weiterer Unteransprüche und werden anhand eines in Zeichnungen dargestellten Ausführungsbeispiels näher erläutert.

Es zeigen
- Figur 1: eine schematische Darstellung der erfindungsgemäßen landwirtschaftlichen Arbeitsmaschine in Seitenansicht.
- Figur 2: eine Schnittdarstellung der erfindungsgemäßen landwirtschaftlichen Arbeitsmaschine entsprechend Schnittlinie II-II in Figur 1 in Ansicht von oben
- Figur 3: eine schematische Seitenansicht der erfindungsgemäßen landwirtschaftlichen Arbeitsmaschine in Transportstellung.

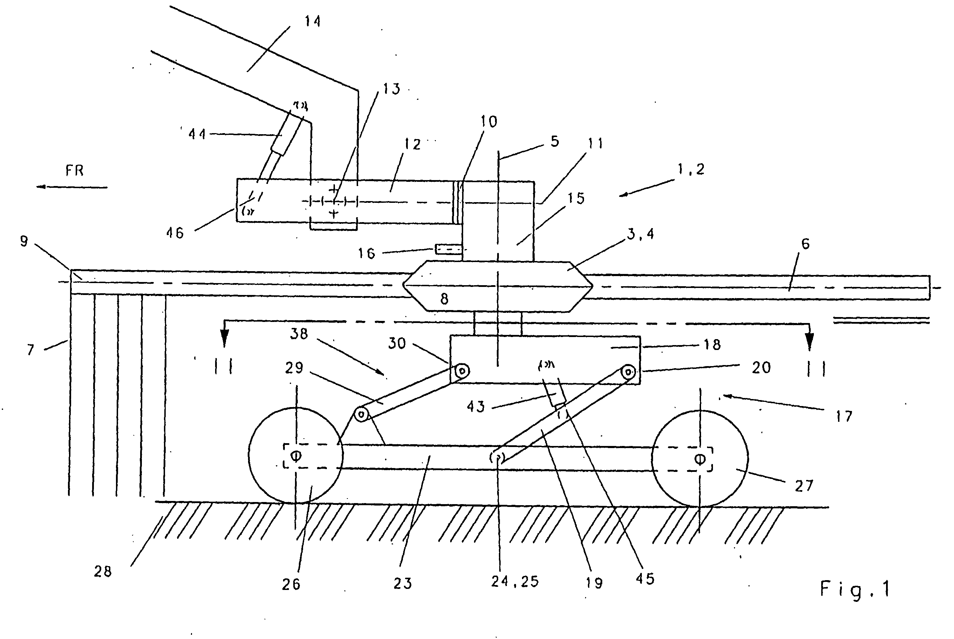

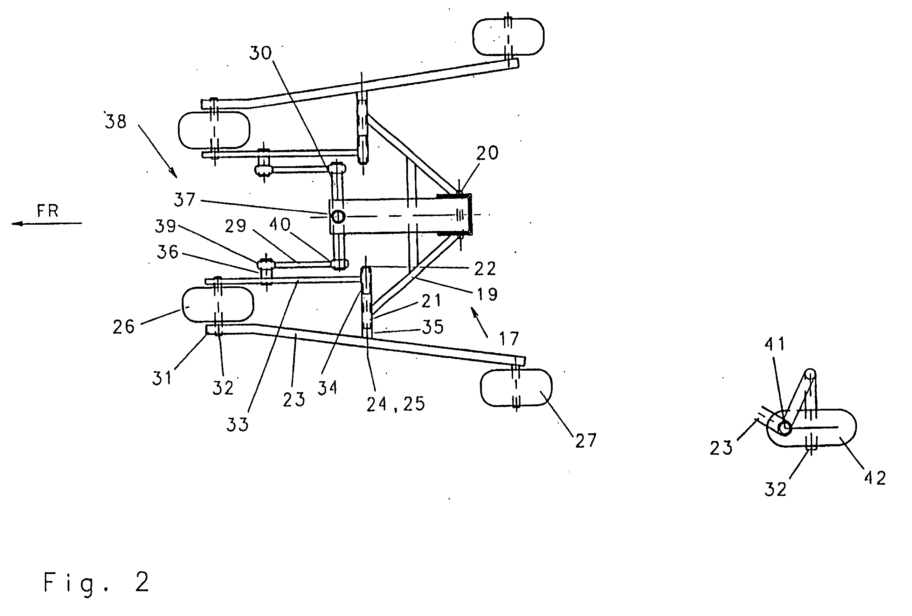

In Figur 1 ist eine als Heuwerbungsmaschine 2 ausgeführte landwirtschaftliche Arbeitsmaschine 1 dargestellt, deren Arbeitswerkzeug 3 von einem um eine annähernd vertikale Achse 5 umlaufenden Rechkreisel 4 gebildet wird. Der Rechkreisel 4 verfügt über eine Vielzahl von Tragarmen 6, die radial zur Kreiselachse 5 angeordnet sind und in ihrem der Kreiselachse 5 abgewandten Bereich ein oder mehrere Rechzinken 7 aufnehmen. Anderenends werden die Tragarme 6 in einer an sich bekannten und deshalb nicht näher beschriebenen Kurvensteuerung 8 in der Weise geführt, daß jeder Tragarm 6 Schwenkbewegungen um seine Mittelachse 9 ausführen kann, wobei die Rechzinken 7 von einer bodennahen in eine bodenferne Stellung und umgekehrt verschwenkt werden können. Obenseitig ist dem Rechkreisel 4 ein beliebig ausgeführtes, den Rechkreisel 4 in Drehung versetzendes Getriebe 15 zugeordnet, welches einen Flansch 10 aufweist, der über eine in Fahrtrichtung FR verlaufende Achse 11 schwenkbar an einem Hilfsrahmen 12 angelenkt ist. Der Hilfsrahmen 12 wiederum ist um eine horizontale und quer zur Fahrtrichtung verlaufende Schwenkachse 13 an einem Hauptrahmen 14 angeordnet, der anderenends beispielsweise an einem nicht dargestellten Trägerfahrzeug angehängt oder aufgesattelt sein kann. Das den Rechkreisel 4 in Drehung versetzende Getriebe 15 kann einfachstenfalls über eine in Figur 1 strichpunktiert angedeutete Gelenkwelle 16 direkt mit der Zapfwelle des Trägerfahrzeugs oder bei mehreren vorhandenen Arbeitswerkzeugen 3 mit einem nicht dargestellten Zwischengetriebe und dieses dann mit der Zapfwelle des Trägerfahrzeugs verbunden sein. Untenseitig ist dem Rechkreisel 4 über einen Hilfsrahmen 18 ein Fahrwerk 17 zugeordnet, dessen gabelförmiger Tragrahmen 19 über eine quer zur Fahrtrichtung FR verlaufende Achse 20 schwenkbar an diesem Hilfsrahmen 18 angelenkt ist. Bodenseitig sind dem gabelförmigen Tragrahmen 19 gemäß Figur 2 sich quer zur Fahrtrichtung FR erstreckende Buchsen 21 drehfest zugeordnet, die in ihrem Inneren von Tragzapfen 22 durchsetzt werden, die jeweils in ihrem außenliegenden Bereich eine Doppelschwinge 23 drehfest aufnehmen. Die horizontal und quer zur Fahrtrichtung FR angeordneten Mittelachsen 24 der Tragzapfen 22 haben eine zueinander fluchtende Lage und bilden die Pendelachsen 25 der jeweiligen Doppelschwingen 23. Jeder Doppelschwinge 23 sind in einem vor und hinter der Pendelachse 25 liegenden Bereich wenigstens jeweils ein vorderes und ein hinteres Laufrad 26, 27 zugeordnet, welche das Fahrwerk 17 und den mit dem Fahrwerk 17 verbundenen Rechkreisel 4 gegen den Boden 28 abstützen.

Damit das zur besseren Bodenanpassung um eine in und quer zur Fahrtrichtung FR angeordnete Achse 11, 13 pendelbare Arbeitswerkzeug 3 von dem Fahrwerk 17 sicher getragen werden kann, sind dem Fahrwerk 17 erfindungsgemäß Koppelglieder zugeordnet, die die Doppelschwingen 23 miteinander und mit dem Arbeitswerkzeug 3 in noch näher zu beschreibender Weise gelenkig verbinden.

In Fahrtrichtung vorn liegend ist jeder Doppelschwingen 23 ein Flansch 31 angeformt, der von je einer Laufradachse 32 drehfest durchsetzt wird, die jeweils zumindest ein in axialer Richtung gesichertes vorderes Laufrad 26 drehbar aufnimmt. An der Innenseite jedes Laufrades 26 nimmt die Laufradachse 32 eine ebenfalls axial gesicherte Haltestrebe 33 drehbar auf, die anderenends mit dem jeweiligen Tragzapfen 22 drehbar und in axialer Richtung gesichert verbunden ist. Dabei wird die Haltestrebe 33 auf dem Tragzapfen 22 durch auf dem Tragzapfen 22 mit der Buchse 21 zusammenarbeitende Distanzbuchsen 34, 35 oder in nicht dargestellter Weise mittels durchgehender Buchse 21 gegen die jeweilige, den Tragzapfen 22 aufnehmende Doppelschwinge 23 lagefixiert.

Jede Haltestrebe 33 nimmt an jeweils gleicher Stelle einen Zapfen 36 dreh- und biegefest auf, der erfindungsgemäß gelenkig mit wenigstens einer Zug-Druck-Strebe 29 verbunden ist, die anderenends ebenfalls gelenkig mit einem Pendelbalken 30 in Wirkverbindung steht, wobei der Pendelbalken 30 um eine vertikale Achse 37 schwenkbar am Arbeitswerkzeug 3 oder einem mit dem Arbeitswerkzeug 3 drehfest verbundenen Hilfsrahmen 18 befestigt ist. Damit der durch die Koppelglieder 29, 30 gebildete erfindungsgemäße Koppelmechanismus 38 zwangskräftefreie Bewegungen ermöglicht, sind die Zug-Druck-Streben 29 über Kugelgelenke 39, 40 mit dem jeweiligen Zapfen 36 und dem gemeinsamen Pendelbalken 30 verbunden. Auf diese Weise ist der durch die Zug-Druck-Streben 29 und den gemeinsamen Pendelbalken 30 gebildete Koppelmechanismus 38 in der Lage die wenigstens zwei, jeweils ein vorderes und ein hinteres Laufrad 26, 27 aufnehmenden Doppelschwingen 23 miteinander und mit dem Arbeitswerkzeug 3 oder dem ihm drehfest zugeordneten Hilfsrahmen 18 zu verbinden, so daß einerseits das um eine quer zur Fahrtrichtung angeordnete Achse 13 schwenkbare Arbeitswerkzeug 3 gegen das Fahrwerk 17 abgestützt werden kann und andererseits der Koppelmechanismus 38 zwangskräftefrei die voneinander unabhängige Schwenkbewegung der bodenkopierenden Laufräder 26, 27 nachvollziehen kann, ohne deren bodenkopierende Funktion einzuschränken.

Die Zuordnung der den Koppelmechanismus 38 aufnehmenden Zapfen 36 zur jeweiligen Doppelschwinge 23 ist nicht auf die beschriebene Ausführungsform beschränkt. Die Zapfen 36 können auch in nicht dargestellter Weise direkt von den Laufradachsen 32 gebildet werden oder unmittelbar an den Doppelschwingen 23 spiegelbildlich zueinander angreifen, wobei das der jeweiligen Doppelschwinge 23 zugeordnete Laufrad 26 auch ohne zusätzliche Haltestrebe 33 ausgeführt sein kann. Zudem liegt es im Rahmen der Erfindung den Koppelmechanismus 38 und den gabelförmigen Tragrahmen 19 des Fahrwerks 17 um 180° versetzt am Hilfsrahmen 18 des Rechkreisels 4 anzuordnen, so daß dann die Zug-Druck-Streben 29 im Bereich der hinteren Laufräder 27 mit der jeweiligen Doppelschwinge 23 gelenkig verbunden sind.

Damit die landwirtschaftliche Arbeitsmaschine 1 auch bei großer Hangneigung noch sicher mit ihren Laufrädern 26, 27 auf dem Boden steht, können die Doppelschwingen 23 jedes Fahrwerks 17 eine in Fahrtrichtung FR konvergierende Lage einnehmen, so daß die in Fahrtrichtung FR vorn liegenden Laufräder 26 im Vergleich zu den hinteren Laufrädern 27 einen geringeren, sich quer zur Fahrtrichtung FR erstreckenden Abstand zueinander aufweisen. Eine deartige Anordnung der Laufräder 26, 27 ist immer dann möglich, wenn nur ein Teil der Laufräder 26, 27 im Arbeitsbereich der Arbeitswerkzeuge 3, 4 angeordnet ist. Im beschriebenen Ausfuhrungsbeispiel können die hinteren Laufräder 27 über einen größeren Abstand zueinander verfügen, da die Rechzinken 7 des als Rechkreisel 4 ausgeführten Arbeitswerkzeugs 3 in diesem Bereich eine bodenferne Lage einnehmen. Damit wird es möglich eine die Kippgefahr der Heuwerbungsmaschine 2 verringernde größere Aufstandsfläche der Laufräder 26, 27 auf dem Boden 28 zu realisieren.

Damit die Koppelglieder 29, 30 des erfindungsgemäßen Koppelmechanismus 38 das umlaufende, als Rechkreisel 4 ausgeführte Arbeitswerkzeug 3 nicht bei der Aufnahme, dem Weitertransport und der einseitigen Ablage des Erntegutes behindern, sind die Zug-Druck-Streben 29 und der Pendelbalken 30 im Zwischenraum zwischen den am geringsten voneinander beabstandeten vorderen Laufrädern 26 angeordnet, wobei wenigstens die Zug-Druck-Streben 29 teilweise in den sich quer zur Fahrtrichtung erstreckenden Bereich zwischen den jeweils vorderen Laufrädern 26 hineinragen.

Damit beispielsweise auch landwirtschaftliche Arbeitsmaschinen 1, die zur Realisierung großer Arbeitsbreiten über mehrere Arbeitswerkzeuge 3 verfügen, wobei jedes Arbeitswerkzeug 3 von einem erfindungsgemäßen Fahrwerk 17 getragen wird auch bei Kurvenfahrt beherrschbar bleiben, kann wenigstens ein Laufrad 27 jeder Doppelschwinge 23 als ein um eine vertikale Achse 41 verschwenkbares Nachlaufrad 42 ausgebildet sein.

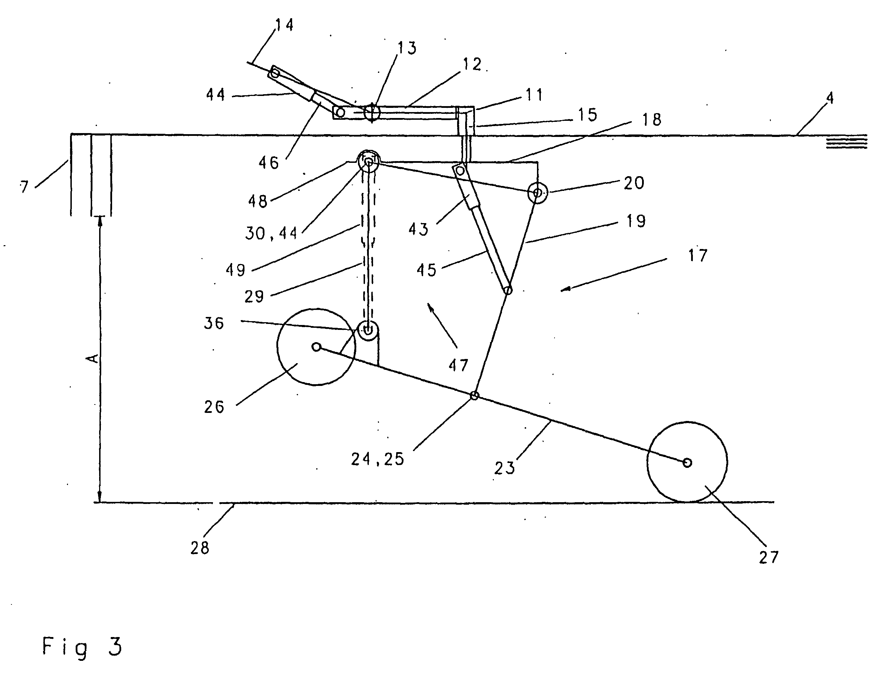

Um den Abstand A der Rechzinken 7 zum Boden 28 beispielsweise für den Straßentransport voreinstellen zu können, verfügt die als Heuwerbungsmaschine 2 ausgeführte landwirtschaftliche Arbeitsmaschine 1 über ein Hubzylindersystem 43, 44, wobei der Hubzylinder 43 den Tragrahmen 19 des Fahrwerks 17 gelenkig mit dem untenseitigen Hilfsrahmen 18 des Arbeitswerkzeugs 3 und der Hubzylinder 48 den obenseitigen Hilfsrahmen 12 des Arbeitswerkzeugs 3 mit dem Hauptrahmen 14 der Heuwerbungsmaschine 2 verbindet. Beide Hubzylinder 43, 44 sind über ein nicht dargestelltes Leitungssystem miteinander in Parallelschaltung und über ein ebenfalls nicht dargestelltes weiteres Leitungsystem mit dem Trägerfahrzeug verbunden. Werden die Hubzylinder 43, 44 druckbeaufschlagt, tritt die Kolbenstange 45 aus dem Hubzylinder 43 aus und verschwenkt den Rechkreisel 4 um Achse 13, wobei sowohl der Tragrahmen 19 als auch die Zug-Druck-Streben 29 eine Schwenkbewegung in vertikaler Richtung ausführen. Gleichzeitig fährt die Kolbenstange 46 des Hubzylinders 44 ein, wobei der Hilfsrahmen 12 und damit der Rechkreisel 4 in entgegengesetzter Richtung um Achse 13 verschwenkt wird, so daß das Arbeitswerkzeug 3 in eine bodenferne Lage gelangt und die vorderen Laufräder 26 der Doppelschwingen 23 vom Boden abheben (Figur 3).

Um eine funktionssichere Abstützung des Arbeitswerkzeuges 3 gegenüber dem Doppelschwingen 23 aufweisenden Fahrwerk 17 zu erreichen, sind die die Doppelschwingen 23 mit dem Arbeitswerkzeug 3 gelenkig verbindenden Zug-Druck-Streben 29 in einer zur Vertikalen geneigten Lage angeordnet, so daß jede Zug-Druck-Strebe 29 mit dem Hilfsrahmen 18, der ihr zugeordneten Doppelschwinge 23 und dem gabelförmigen Tragrahmen 19 des Fahrwerks 17 ein Gelenkviereck 47 bildet (Fig. 3). Sind dabei die Zug-Druck-Streben 29 von geringerer Länge als der gabelförmige Tragrahmen 19 des Fahrwerks 17 führt die Druckbeaufschlagung des Hubzylinders 44 dazu, daß das beschriebene Rückschwenken des Arbeitswerkzeugs 3 um Achse 13 das Anheben der in Fahrtrichtung FR vorderen Laufräder 26 verursacht. Auf diese Weise wird es möglich, daß zur Erreichung einer größeren Laufruhe die landwirtschaftliche Arbeitsmaschine 1 beim Straßentransport nur auf zwei der wenigstens vier Laufräder 26, 27 abgestützt wird.

Da die Doppelschwingen 23 und die mit ihnen verbundenen Koppelglieder 29, 30 jedes Fahrwerks 17 unabhängig voneinander verschwenkt werden können, kann dies beim Ausheben der vorderen Laufräder 26 gemäß Figur 3 dazu führen, daß die Laufräder nicht gleichmäßig angehoben werden und im ungünstigsten Fall wenigstens ein Laufrad 26 mit den Tragarmen 6 des Arbeitswerkzeugs 3 in Kontakt kommt. Um eine solche Lage der Laufräder 26 zu vermeiden, ist wenigstens die Schwenkbewegung der als Zug-Druck-Streben 29 ausgeführten Koppelglieder in vertikaler Richtung begrenzt. Im einfachsten Fall kann dies durch beliebig ausgeführte in Figur 3 nur schematisch angedeutete Anschläge 48 erreicht werden.

In einer weiteren vorteilhaften Ausgestaltung der Erfindung können die Zug-Druck-Streben 29 auch durch parallelgeschaltete Hubzylinder 49 ersetzt sein, die jede Doppelschwinge 23 gelenkig mit dem Arbeitswerkzeug 3, 4 oder einem diesem Arbeitswerkzeug 3, 4 zugeordneten Hilfsrahmen 18 verbindet, sodaß die mechanische Koppelung der Doppelschwingen 23 des Fahrwerks 17 mit dem Arbeitswerkzeug 3, 4 auch durch eine hydraulische Koppelung ersetzt sein kann.

Die beschriebene Erfindung ist nicht auf eine als Heuwerbungsmaschine 2 ausgeführte landwirtschaftliche Arbeitsmaschine 1 beschränkt, sondern kann auf beliebig ausgeführte landwirtschaftliche Arbeitsmaschinen übertragen werden, um die beschriebenen Effekte zu erzielen.

### Bezugszeichenliste

- 1: landwirtschaftliche Arbeitsmaschine
- 2: Heuwerbungsmaschine
- 3: Arbeitswerkzeug
- 4: Rechkreisel
- 5: vertikale Achse
- 6: Tragarm
- 7: Rechzinken
- 8: Kurvensteuerung
- 9: Mittelachse
- 10: Flansch
- 11: Achse
- 12: Hilfsrahmen
- 13: Schwenkachse
- 14: Hauptrahmen
- 15: Getriebe
- 16: Gelenkwelle
- 17: Fahrwerk
- 18: Hilfsrahmen
- 19: gabelförmiger Tragrahmen
- 20: Achse
- 21: Buchse
- 22: Tragzapfen
- 23: Doppelschwinge
- 24: Mittelachse
- 25: Pendelachse
- 26: Laufrad
- 27: Laufrad
- 28: Boden
- 29: Zug-Druck-Strebe
- 30: Pendelbalken
- 31: Flansch
- 32: Laufradachse
- 33: Haltestrebe
- 34: Distanzbuchse
- 35: Distanzbuchse
- 36: Zapfen
- 37: vertikale Achse
- 38: Koppelmechanismus
- 39: Kugelgelenk
- 40: Kugelgelenk
- 41: vertikale Achse
- 42: Nachlaufrad
- 43: Hubzylinder
- 44: Hubzylinder
- 45: Kolbenstange
- 46: Kolbenstange
- 47: Gelenkviereck
- 48: Anschläge
- 49: Hubzylinder

- A: Abstand
- FR: Fahrtrichtung

## Patentansprüche

1. Landwirtschaftliche Arbeitsmaschine mit zumindest einem, um eine quer zur Fahrtrichtung verlaufende, an einem Tragrahmen (14) angeordnete Schwenkachse (13) verschwenkbaren Arbeitswerkszeug und einem dem Arbeitswerkzeug zugeordneten Fahrwerk, wobei das Fahrwerk (17) von wenigstens einem Paar um eine horizontale und quer zur Fahrtrichtung (FR) verlaufende Achse (25) pendelbaren, über wenigstens ein vorderes und ein hinteres Laufrad (26, 27) verfügende Doppelschwingen (23) gebildet wird, wobei die Doppelschwingen (23) miteinander und mit dem Arbeitswerkzeug (3, 4) über einen Koppelglieder aufweisenden Koppelmechanismus (38) und einen gabelförmigen Rahmen (19) gelenkig verbunden sind, **dadurch gekennzeichnet, dass** die Koppelglieder des Koppelmechanismus (38) als Zug-Druck-Streben (29) mit um eine vertikale Achse (37) schwenkbar mit dem Arbeitswerkzeug (3, 4) verbunden Pendelbalken (30) gelenkig verbunden sind.

2. Landwirtschaftliche nach Anspruch 1, **dadurch gekennzeichnet, dass** die Zug-Druck-Streben (29) des Koppelmechanismus (38) als Hubzylinder (49) ausgebildet und in Parallelschaltung miteinander verbunden, mit um die vertikale Achse (37) schwenkbar mit dem Arbeitswerkzeug (3, 4) verbunden Pendelbalken (30) gelenkig verbunden sind.

3. Landwirtschaftliche Arbeitsmaschine nach Anspruch 1 oder 2, **dadurch gekennzeichnet, daß** jede Zug-Druck-Strebe (29) über Kugelgelenke (39, 40) mit der diesem zugeordneten Doppelschwinge (23) und dem Pendelbalken (30) verbunden ist.

4. Landwirtschaftliche Arbeitsmaschine nach einem oder mehreren der vorhergehenden Ansprüche, **dadurch gekennzeichnet, daß** der Pendelbalken (30) direkt am Arbeitswerkzeug (3, 4) oder an einem drehfest mit dem Arbeitswerkzeug (3, 4) verbundenen Hilfsrahmen (18) angelenkt ist.

5. Landwirtschaftliche Arbeitsmaschine nach einem oder mehreren der vorhergehenden Ansprüche, **dadurch gekennzeichnet, daß** jede Zug-Druck-Strebe (29) in einer zur Vertikalen geneigten Lage die ihr zugeordnete Doppelschwinge (23) mit dem Pendelbalken (30) verbindet.

6. Landwirtschaftliche Arbeitsmaschine nach einem oder mehreren der vorhergehenden Ansprüche, **dadurch gekennzeichnet, daß** das Fahrwerk (17) von einem Tragrahmen (19) gebildet wird, der um eine horizontale und quer zur Fahrtrichtung FR verlaufende Achse (20) schwenkbar mit dem Arbeitswerkzeug (3, 4) verbunden ist und zwischen Arbeitswerkzeug (3, 4) und dem Tragrahmen (19) eine Höhenverstellung (43, 45) zwischengeschaltet ist.

7. Landwirtschaftliche Arbeitsmaschine nach einem oder mehreren der vorhergehenden Ansprüche, **dadurch gekennzeichnet, daß** zwischen Arbeitswerkzeug (3, 4) und Hauptrahmen (14) eine weitere Höhenverstellung (44, 46) zwischengeschaltet ist.

8. Landwirtschaftliche Arbeitsmaschine nach einem oder mehreren der Ansprüche 9 oder 10, **dadurch gekennzeichnet, daß** die Höhenverstellungen (43-46) von Hubzylindern (43, 45) gebildet werden und daß die Hubzylinder (43, 45) der Höhenverstellungen (43-46) in Parallelschaltung miteinander verbunden sind.

9. Landwirtschaftliche Arbeitsmaschine nach einem oder mehreren der vorhergehenden Ansprüche, **dadurch gekennzeichnet, daß** jedem Arbeitswerkzeug (3, 4) nur eine Höhenverstellung (43-44, 45-46) zugeordnet ist.

10. Landwirtschaftliche Arbeitsmaschine nach einem oder mehreren der vorhergehenden Ansprüche, **dadurch gekennzeichnet, daß** der verschwenkbare Tragrahmen (19) des Fahrwerks (17) mit seinen Schwenkachsen (20, 24, 25) und die Zug-Druck-Streben (29) mit ihren Schwenkachsen (30, 36, 44) ein Gelenkviereck (47) bilden, wobei die Länge der Zug-Druck-Streben (29) zwischen ihren Gelenkpunkten (30, 36, 44) kleiner als die Länge des Tragrahmens (19) des Fahrwerks (17) zwischen seinen Gelenkpunkten (20, 24, 25) oder umgekehrt ist.

11. Landwirtschaftliche Arbeitsmaschine nach einem oder mehreren der vorhergehenden Ansprüche, **dadurch gekennzeichnet, daß** die Schwenkbewegung des Koppelmechanismus (38) in vertikaler Richtung durch Anschläge (48) begrenzt wird.

12. Landwirtschaftliche Arbeitsmaschine nach einem oder mehreren der vorhergehenden Ansprüche, **dadurch gekennzeichnet, daß** die Zug-Druck-Streben (29) jeder Doppelschwinge (23) wenigstens teilweise in dem sich quer zur Fahrtrichtung FR erstreckenden Zwischenraum zwischen den Laufrädern (26, 27) jeder Doppelschwinge (23) angeordnet sind.

13. Landwirtschaftliche Arbeitsmaschine nach Anspruch 12, **dadurch gekennzeichnet, daß** jede Zug-Druck-Strebe (29) einenends jeweils an der Laufradachse (32) eines Laufrades (26, 27) der jeweiligen Doppelschwinge (23) angelenkt ist.

14. Landwirtschaftliche Arbeitsmaschine nach einem oder mehreren der vorhergehenden Ansprüche, **dadurch gekennzeichnet, daß** die die Zug-Druck-Strebe (29) aufnehmende Laufradachse (32) über wenigstens eine drehbeweglich an der Zug-Druck-Strebe (29) angeordnete Haltestrebe (33) mit der Pendelachse (25) der Doppelschwingen (23) drehbar verbunden ist.

15. Landwirtschaftliche Arbeitsmaschine nach einem oder mehreren der vorhergehenden Ansprüche, **dadurch gekennzeichnet, daß** der sich quer zur Fahrrichtung FR erstreckende Abstand der vorderen Laufräder (26) jeder Doppelschwinge (23) zueinander geringer ist als der sich quer zur Fahrtrichtung FR erstreckende Abstand der hinteren Laufräder (27) jeder Doppelschwinge (23) zueinander.

16. Landwirtschaftliche Arbeitsmaschine nach einem oder mehreren der vorhergehenden Ansprüche, **dadurch gekennzeichnet, daß** wenigstens ein Laufrad (26, 27) jeder Doppelschwinge (23) als Nachlaufrad (46) ausgeführt ist.

17. Landwirtschaftliche Arbeitsmaschine nach einem oder mehreren der vorhergehenden Ansprüche, **dadurch gekennzeichnet, daß** das wenigstens eine Arbeitswerkzeug (3) als um eine annähernd vertikale Achse (5) umlaufender Rechkreisel (4) ausgeführt ist.

## Claims

1. An agricultural working machine comprising at least one working implement pivotable about a pivot axis (13) extending transversely with respect to the direction of travel and arranged on a carrier frame (14), and a chassis associated with the working implement, wherein the chassis (17) is formed by at least one pair of double swing arms (23) which can swing about a horizontal axis (25) extending transversely with respect to the direction of travel (FR) and which have at least a front and a rear wheel (26, 27), wherein the double swing arms (23) are hingedly connected to each other and to the working implement (3, 4) by way of a coupling mechanism (38) having coupling members and by way of a fork-shaped frame (19), **characterised in that** the coupling members of the coupling mechanism (38) are hingedly connected as tension-compression struts (29) to swing bars (30) connected to the working implement (3, 4) pivotably about a vertical axis (37).

2. An agricultural working machine according to claim 1 **characterised in that** the tension-compression struts (29) of the coupling mechanism (38) are in the form of stroke cylinders (49) and are connected together in parallel circuit and are hingedly connected to swing bars (30) connected to the working implement (3, 4) pivotably about the vertical axis (37).

3. An agricultural working machine according to claim 1 or claim 2 **characterised in that** each tension-compression strut (29) is connected by way of ball joints (39, 40) to the double swing arm (23) associated therewith and to the swing bar (30).

4. An agricultural working machine according to one or more of the preceding claims **characterised in that** the swing bar (30) is pivotably mounted directly to the working implement (3, 4) or to an auxiliary frame (18) connected non-rotatably to the working implement (3, 4).

5. An agricultural working machine according to one or more of the preceding claims **characterised in that** each tension-compression strut (29), in a position inclined with respect to the vertical, connects the double swing arm (23) associated therewith to the swing bar (30).

6. An agricultural working machine according to one or more of the preceding claims **characterised in that** the chassis (17) is formed by a carrier frame (19) which is connected to the working implement (3, 4) pivotably about a horizontal axis (20) extending transversely with respect to the direction of travel (FR) and a height adjustment means (43, 45) is interposed between the working implement (3, 4) and the carrier frame (19).

7. An agricultural working machine according to one or more of the preceding claims **characterised in that** a further height adjustment means (44, 46) is interposed between the working implement (3, 4) and the main frame (14).

8. An agricultural working machine according to one or more of claims 9 and 10 **characterised in that** the height adjustment means (43-46) are formed by stroke cylinders (43, 45) and that the stroke cylinders (43, 45) of the height adjustment means (43-46) are connected together in a parallel circuit.

9. An agricultural working machine according to one or more of the preceding claims **characterised in that** only one height adjustment means (43-44, 45-46) is associated with each working implement (3, 4).

10. An agricultural working machine according to one or more of the preceding claims **characterised in that** the pivotable carrier frame (19) of the chassis (17) with its pivot axes (20, 24, 25) and the tension-compression struts (29) with their pivot axes (30, 36, 44) form a pivotal quadrilateral (47), wherein the length of the tension-compression struts (29) between their pivot points (30, 36, 44) is less than the length of the carrier frame (19) of the chassis (17) between its pivot points (20, 24, 25) or vice-versa.

11. An agricultural working machine according to one or more of the preceding claims **characterised in that** the pivotal movement of the coupling mechanism (38) is limited in the vertical direction by abutments (48).

12. An agricultural working machine according to one or more of the preceding claims **characterised in that** the tension-compression struts (29) of each double swing arm (23) are at least partially arranged in the intermediate space extending transversely to the direction of travel (FR) between the wheels (26, 27) of each double swing arm (23).

13. An agricultural working machine according to claim 12 **characterised in that** each tension-compression strut (29) is respectively pivotably connected at one end to the wheel axle (32) of a wheel (26, 27) of the respective double swing arm (23).

14. An agricultural working machine according to one or more of the preceding claims **characterised in that** the wheel axle (32) carrying the tension-compression strut (29) is connected rotatably to the swing axle (25) of the double swing arms (23) by way of at least one holding strut (33) arranged rotatably at the tension-compression strut (29).

15. An agricultural working machine according to one or more of the preceding claims **characterised in that** the spacing, extending transversely with respect to the direction of travel (FR), of the front wheels (26) of each double swing arm (23) relative to each other is less than the spacing, extending transversely with respect to the direction of travel (FR), of the rear wheels (27) of each double swing arm (23).

16. An agricultural working machine according to one or more of the preceding claims **characterised in that** at least one wheel (26, 27) of each double swing arm (23) is in the form of a trailing wheel (46).

17. An agricultural working machine according to one or more of the preceding claims **characterised in that** the at least one working implement (3) is in the form of a rotary rake (4) which rotates about an approximately vertical axis (5).

## Revendications

1. Machine agricole de travail avec au moins un outil de travail disposé perpendiculairement à la direction de déplacement et pouvant pivoter autour d'un axe de pivotement (13) monté sur un bâti porteur (14) et avec un train de roulement associé à l'outil de travail, le train de roulement (17) étant formé d'au moins une paire de doubles bras oscillants (23) pouvant osciller autour d'un axe (25) horizontal perpendiculaire à la direction de déplacement (FR) et dotés au moins d'une roue de roulement antérieure et d'une roue de roulement postérieure (26, 27), les doubles bras oscillants (23) étant reliés de manière articulée entre eux et à l'outil de travail (3, 4) par un mécanisme de couplage (38) possédant des organes de couplage et un châssis (19) en forme de fourche, **caractérisée en ce que** les organes de couplage du mécanisme de couplage (38), constituant des jambes de force travaillant en traction et en poussée (29), sont reliés de manière articulée à une poutre oscillante (30) reliée à l'outil de travail (3, 4) en pouvant pivoter autour d'un axe vertical (37).

2. Machine agricole de travail selon la revendication 1, **caractérisée en ce que** les jambes de force travaillant en traction et en poussée (29) du mécanisme de couplage (38) prennent la forme de vérins de levage (49), sont connectées entre elles en parallèle et sont reliées de manière articulée à la poutre oscillante (30) reliée à l'outil de travail (3, 4) en pouvant pivoter autour de l'axe vertical (37).

3. Machine agricole de travail selon la revendication 1 ou 2, **caractérisée en ce que** chacune des jambes de force travaillant en traction et en poussée (29) est reliée par des articulations à rotule (39, 40) au double bras oscillant (23) qui lui correspond et à la poutre oscillante (30).

4. Machine agricole de travail selon une ou plusieurs des revendications précédentes, **caractérisée en ce que** la poutre oscillante (30) est directement articulée sur l'outil de travail (3, 4) ou sur un châssis auxiliaire (18) solidaire en rotation de l'outil de travail (3, 4).

5. Machine agricole de travail selon une ou plusieurs des revendications précédentes, **caractérisée en ce que**, dans une position inclinée par rapport à la verticale, chacune des jambes de force travaillant en traction et en poussée (29) relie le double bras oscillant (23) qui lui correspond et la poutre oscillante (30).

6. Machine agricole de travail selon une ou plusieurs des revendications précédentes, **caractérisée en ce que** le train de roulement (17) est formé d'un châssis porteur (19) qui est relié à l'outil de travail (3, 4) en pouvant pivoter autour d'un axe (20) horizontal perpendiculaire à la direction de déplacement FR, et **en ce qu'**un mécanisme de réglage en hauteur (43, 45) est interposé entre l'outil de travail (3, 4) et le châssis porteur (19).

7. Machine agricole de travail selon une ou plusieurs des revendications précédentes, **caractérisée en ce qu'**un second mécanisme de réglage en hauteur (44, 46) est interposé entre l'outil de travail (3, 4) et le châssis porteur (14).

8. Machine agricole de travail selon une ou plusieurs des revendications 9 et 10, **caractérisée en ce que** les mécanismes de réglage en hauteur (43 à 46) sont formés par des vérins de levage (43, 45), et **en ce que** les vérins de levage (43, 45) des mécanismes de réglage en hauteur (43 à 46) sont connectés entre eux en parallèle.

9. Machine agricole de travail selon une ou plusieurs des revendications précédentes, **caractérisée en ce qu'**un seul mécanisme de réglage en hauteur (43 et 44, 45 et 46) est associé à chaque outil de travail (3, 4).

10. Machine agricole de travail selon une ou plusieurs des revendications précédentes, **caractérisée en ce que** le châssis porteur pivotant (19) du train de roulement (17), avec ses axes de pivotement (20, 24, 25), et les jambes de force travaillant en traction et en poussée (29), avec leurs axes de pivotement (30, 36, 44), forment un quadrilatère articulé (47), la longueur des jambes de force travaillant en traction et en poussée (29) entre leurs points d'articulation (30, 36, 44) étant inférieure à la longueur du châssis porteur (19) du train de roulement (17) entre ses points d'articulation (20, 24, 25), ou inversement.

11. Machine agricole de travail selon une ou plusieurs des revendications précédentes, **caractérisée en ce que** le mouvement de pivotement du mécanisme de couplage (38) est limité dans la direction verticale par des butées (48).

12. Machine agricole de travail selon une ou plusieurs des revendications précédentes, **caractérisée en ce que** les jambes de force travaillant en traction et en poussée (29) de chacun des doubles bras oscillants (23) sont disposées au moins partiellement dans l'espace s'étendant perpendiculairement à la direction de déplacement FR entre les roues de roulement (26, 27) de chaque double bras oscillant (23).

13. Machine agricole de travail selon la revendication 12, **caractérisée en ce que** chacune des jambes de force travaillant en traction et en poussée (29) est articulée à l'une de ses extrémités sur l'axe de roue (32) d'une roue de roulement (26, 27) du double bras oscillant (23) respectif.

14. Machine agricole de travail selon une ou plusieurs des revendications précédentes, **caractérisée en ce que** l'axe de roue (32) recevant les jambes de force travaillant en traction et en poussée (29) est relié de manière pivotante à l'axe de pivotement (25) des doubles bras oscillants (23) par l'intermédiaire d'au moins un tirant de maintien (33) monté pivotant sur la jambe de force travaillant en traction et en poussée (29).

15. Machine agricole de travail selon une ou plusieurs des revendications précédentes, **caractérisée en ce que** l'écartement, s'étendant perpendiculairement à la direction de déplacement FR, entre les roues de roulement antérieures (26) de chaque double bras oscillant (23) est inférieur à l'écartement, s'étendant perpendiculairement à la direction de déplacement FR, entre les roues de roulement postérieures (27) de chaque double bras oscillant (23).

16. Machine agricole de travail selon une ou plusieurs des revendications précédentes, **caractérisée en ce qu'**au moins une roue de roulement (26, 27) de chaque double bras oscillant (23) prend la forme d'une roue suiveuse (46).

17. Machine agricole de travail selon une ou plusieurs des revendications précédentes, **caractérisée en ce qu'**au moins l'un des outils de travail (3) prend la forme d'un râteau rotatif (4) tournant autour d'un axe sensiblement vertical (5).
